# EUROPEAN PATENT APPLICATION

(11) **EP 3 182 620 A1**
(43) Date of publication of application: **21.06.2017**
(21) Application number: 15307019.8
(22) Date of filing: 16.12.2015
(51) Int. Cl.: H04B 17/21, H04B 17/26, H04B 17/318, H04B 17/00, H04W 24/02, H04W 84/12

(54) **METHOD FOR VERIFYING AN RSSI VALUE OF A NETWORK DEVICE, RESPECTIVE NETWORK DEVICE, TEST APPLICATION AND STORAGE MEDIUM**

(71) Applicant: Thomson Licensing, 92130 Issy-les-Moulineaux (FR)
(72) Inventor: Gyselinck, Luc, 2980 Zoersel (BE)
(74) Representative: Huchet, Anne

(57) **Abstract**

A method for verifying a radio signal strength information (RSSI) value of a first network device comprises: providing a wireless connection between the first network device with a second wireless network device, measuring the RSSI values in both network devices, varying a distance between the wireless network devices and measuring for each distance the RSSI values in both wireless network devices, and calculating for each distance a difference value of the RSSI values of the two network devices.

## Description

### TECHNICAL FIELD

The disclosure relates to the field of wireless devices communicating with each other via a wireless data communication.

### BACKGROUND

Access gateways are widely used to connect devices in a home to the Internet or to any other wide area network (WAN). Access gateways including wireless technology have a key role in today's home and professional environments.

A mechanism for connecting wireless devices to a wireless local area network (WLAN) is called Wi-Fi, which is a brand name of a Wi-Fi Alliance for devices using an IEEE 802.11 family of standards for a wireless data transmission. The IEEE 802.11 standards define two types of wireless nodes, a general wireless device that can connect to other devices, called a station (denoted as STA), and a special type of a STA that is in control of the network, namely an access point (denoted AP). A Wi-Fi network, also called WLAN, consists of an AP with one or several STA connected to the AP.

Wi-Fi networks are widely used in the meantime, and as a result Wi-Fi network connectivity issues become more apparent being reported. One of the important parameters to troubleshoot Wi-Fi network issues is a Received Signal Strength Indicator (RSSI). In a Wi-Fi network, the RSSI of a station reported at an AP tells how strong the signal is received from that station. Likewise, the RSSI of the AP reported at a station tells how strong the signal is received from that AP. It is clear the validation of the correctness of the RSSI is important for the operation of the Wi-Fi network.

In real life conditions, the RSSI is not a linear function with the distance between AP and station. Many different kind of objects all cause reflections or absorption in accordance with their specific material composition. Even in these conditions it is possible to detect if the AP or the station have correct RSSI reporting, provided the RSSI measurements at AP and station are performed in the very same moment.

It would be advantageous to have a reliable indication about a correct assessment of a RSSI values of a wireless network device.

EP-A-0 601 987 discloses a method and an apparatus for producing a correctly compensated RSSI value from a degraded received radio signal

### SUMMARY

The method for verifying a radio signal strength information (RSSI) value of a first network device comprises: providing a wireless connection between the first network device with a second wireless network device, measuring the RSSI values in both network devices, varying a distance between the wireless network devices and measuring for each distance the RSSI values in both wireless network devices, and calculating for each distance a difference value of the RSSI values of the two network devices.

In an aspect of the invention, the distance for a multitude of distances is varied including distances for which a low RSSI value is obtained, to verify RSSi values in a critical RSSI region. For example, the distance is varied in fine steps for a multitude of distances, for which a RSSI value below -50 dBm is obtained.

In another aspect of the invention, the distance for a multitude of distances is varied in fine steps from distances for which a low RSSI value is obtained to distances for which a high RSSI value are obtained.

In a further aspect of the invention, the difference values for each distance are determined and a difference value deviating from the majority of difference values is qualified as a wrong RSSI measurement in the first or second wireless network device.

The first and second network devices include for example each a wireless node according to an IEEE 802.11 specification for providing the wireless connection.

As an equivalent method, for verifying a radio signal strength information (RSSI) value of a network device, the method comprises: placing the network device in a shielded box, providing wireless signals inside the shielded box via an antenna arranged inside the box, measuring the RSSI values of received wireless signals in the network device, varying a transmitted power of the wireless signals as provided inside the shielded box, and calculating for each transmitted power a difference value between the RSSI value of the network device and the transmitted power of the antenna.

A test application includes instructions, which when executed by a network device, performs one or both of the described methods.

A network device comprising a processor and a memory includes a test application for performing one or both of the described methods.

A non-transitory program storage medium, having stored therein a test application including instructions, which when executed by the network device, performs one or both of the described methods.

### BRIEF DESCRIPTION OF THE DRAWINGS

Preferred embodiments of the disclosure are explained in more detail below by way of example with reference to schematic drawings, which show:
- Fig. 1: an arrangement including a first and a second network device providing a wireless communication,
- Fig. 2: a method for verifying an RSSI value assessment of a wireless link,
- Fig. 3: test results of an RSSI value assessment of a wireless link, and
- Fig. 4: test results of an RSSI value assessment of another wireless link.

### DETAILED DESCRIPTION OF PREFERRED EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for instructional purposes to aid the reader in understanding the principles of the disclosure and the concepts contributed by the inventors to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read only memory ("ROM") for storing software, random access memory ("RAM"), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

In the following description, example methods for verifying a radio signal strength information (RSSI) value of a network device are described, as well as a respective device performing the methods. For purposes of explanation, various specific details are set forth in order to provide a thorough understanding of preferred embodiments. It will be evident, however, to one skilled in the art that the present principles may be practiced without these specific details.

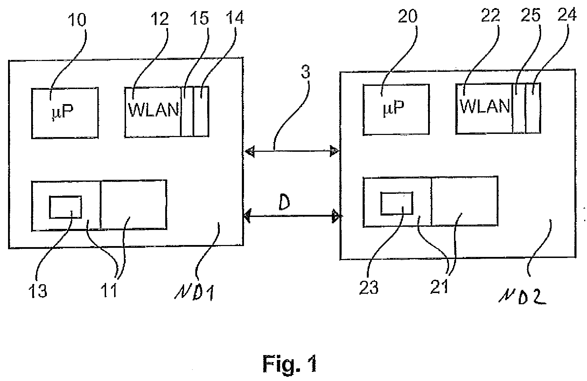

An arrangement illustrating a wireless communication is schematically depicted in figure 1: A first network device ND1 communicates with a second network device ND2, being away by a distance D from the network device ND1, via a wireless link 3. The wireless link 3 is for example a wireless connection according to an IEEE 802.11 specification, and the first network device ND1 is an access point ND1 and the second network device 2 is a station ND2. The access point ND1 includes a circuit comprising a microprocessor 10, a memory 11, a wireless node 12 for the wireless link 3, and a test application 13. The station ND2 includes a second circuit comprising a microprocessor 20, a memory 21, a wireless node 22 for the wireless link 3, and a test application 23. The wireless node 12 includes a physical layer 14 and a link layer 15, and the wireless node 22 includes a physical layer 24 and a link layer 25. The access point ND1 is for example a residential gateway establishing with the station ND2 a home network of an end-user.

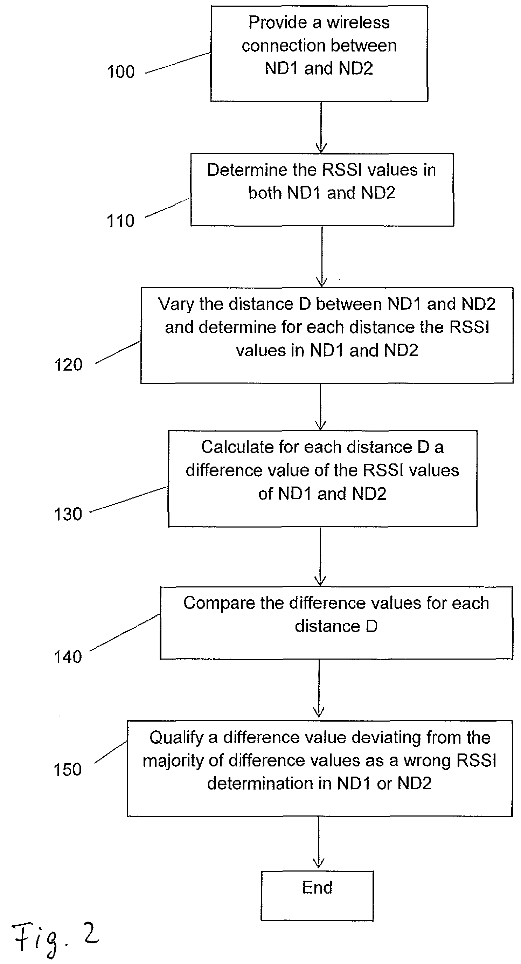

A preferred embodiment of the method for verifying an RSSI value assessment for a wireless link according to an IEEE 802.11 recommendation is illustrated in figure 2. In a first step, a wireless link between the two network devices ND1, ND2 is established, 100. In case the network device ND1 is a residential gateway and the network device ND2 is a station, this can be performed for example by providing beacon signals by the network device ND1, which are used by the station 2 to establish a wireless link in accordance with one of the IEEE 802.11 recommendations.

Alternatively, a direct link setup between two stations in accordance with an IEEE 802.11z recommendation is established.

Then, in both network devices ND1 and ND2, the RSSI values are measured, 110. The RSSI values are expressed in the described embodiments as a power ratio in dBm. In a further step, the distance D between both network devices ND1, ND2 is varied and for each distance D, the RSSI values are measured in the network devices ND1 and ND2, 120. The distance D is in particular varied such, that low RSSI values are obtained, for example by increasing the distance D accordingly. The distance D is varied for example such, that RSSI values are measured between a range of -50 dBm and -90 dBm for a wireless link according to IEEE 802.11, including the lowest RSSI values, for which a stable wireless link can be established. The distance is for example varied in fine steps for a multitude of distances, so that RSSI values in steps having a difference of 1 dB or 2 dB are measured. The RSSI values should be measured at substantially, in a preferred embodiment at exactly, the same time. This can be performed for example by using a Network Time Protocol (NTP) synchronization.

Then, for each distance D, a difference value of the RSSI values of the network devices ND1 and ND2 is calculated, 130. The difference values for each distance D are then compared, 140. For example, both network devices ND1, ND2 transmit wireless signals having the same transmitting power. Then, in the receivers of the network devices ND1 and ND2 always the same receiving power should be measured, for all distances D. Another possibility is that one of the network devices ND1 or ND2 sends wireless signals with a higher transmitter power then the other one. Then, there should exist a constant difference value for the RSSI values for all distances D. Therefore, when there exist a difference value deviating from the majority of difference values, one of the respective measured RSSI values can be classified as a wrong RSSI value measured in one the devices in ND1 or ND2, 140. For example, the difference values have a value of about zero for almost all difference values, because the transmitting powers of the network devices ND1 and ND2 is the same. If there exist some difference values being considerably larger than zero, then these measured RSSI values include wrong RSSI values.

In another embodiment, one of the network devices ND1 or ND2, for which correct RSSI value measurements have to be verified, is placed in a shielded box, and the wireless signals are provided inside the shielded box by an antenna, which is coupled via a variable attenuator with the other network device. By using a programmable attenuator, which can be varied in fine steps over a large dB range, wireless signals ranging from very low power values to high power values can be provided for the network device inside the shielded box. This test setup provides therefore a test measurement, which is equivalent with the method as described with regard to figure 2, where the distance D between the two network devices ND1 and ND2 is varied, because the variable attenuator emulates a pass loss due to variations of the distance D.

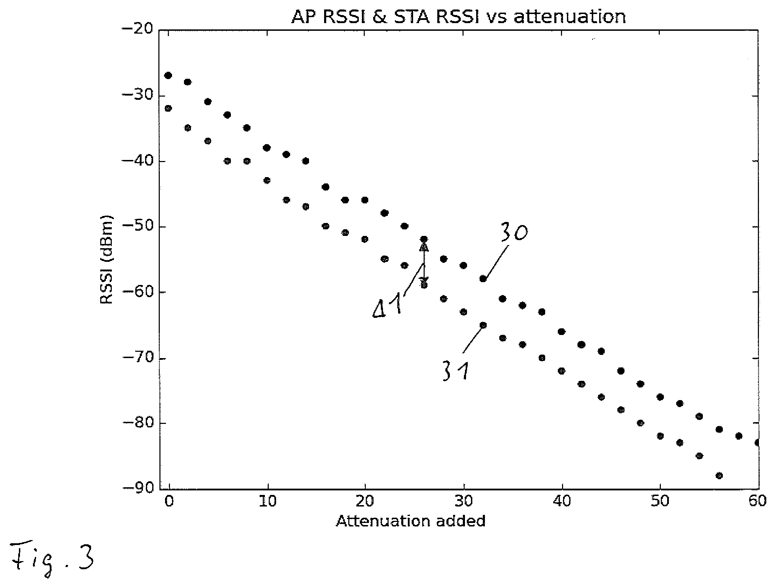

Results of a test measurement, which have been obtained by using the shielded box and the programmable attenuator, are depicted in figure 3. The attenuation provided by the variable attenuator is varied in this embodiment from 0 to 60 dB, which reduces the wireless signals inside the box from about -30 dBm to about -90 dBm, curve 31. The network device inside the shielded box is for example a residential gateway, for which a correct determination of RSSI values has to be verified. The measurements of the RSSI values of the network device inside the box provide RSSI values resulting in a curve 30. As can be seen, for each attenuation, a difference value Δ1 between the RSSI value as provided by the residential gateway inside the shielded box and the attenuated RSSI value as provided by the antenna is about the same. It can be concluded therefore, that the residential gateway yields correct RSSI values over a range of about -30 dBm to about -80 dBm.

The method according to figure 3 can be applied in particular for verifying correct RSSI value determinations during development or after manufacturing of a network device in a factory.

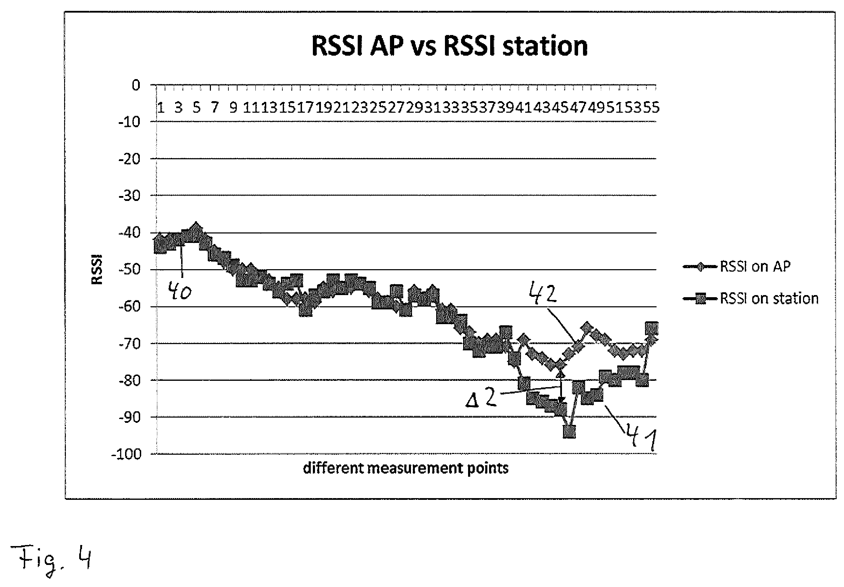

Results of a test, for which the difference D between two network devices ND1, ND2 is varied according to figure 1, are illustrated in figure 4. One of the network devices ND1, ND2 is an access point and the other a station. In this test, the distance D was varied in 55 steps beginning with small distances, steps 1-5, for which comparatively high RSSI values 40 of about -40 dBm were measured in both the access point and the station. As can be seen in figure 4, both devices measure about the same RSSI values.

After the measurements having small distances, steps 1-5, the distance D is increased for further measurements, which yield correspondingly lower RSSI values in both devices. After step 38, RSSI values of only about -70 dBm are measured. As can be seen in figure 4, both devices measure about the same RSSI values until step 38. Then, after step 40, the distance is further increased, which results in lower RSSI values 41 in the station, going down to about - 90 dBm, steps 40 to 54. At the access point side, correspondingly lower RSSI values should be also measured, but the RSSI values 42 of the access point vary only in a region of about -70 dBm. In can be concluded therefore, that the RSSI measurements in the access point are not correct, when the received signals have values below -70 dBm, in particular below -80 dBm.

The method according to figure 4 can be applied for example for verifying correct RSSI value determinations of an access gateway by an end-user.

The methods as described above with regard to figures 2, 3 and/or 4 are implemented as software instructions in the test application 13, respectively test application 23, in case of two network devices are used for the RSSI determination. The test application 13, respectively test application 23, are included in the network devices as used for the test methods and are performed by the processor of the network devices, when running one of the test methods.

Also other embodiments may be utilized by one skilled in the art without departing from the scope of the present disclosure. The described methods in particular are not restricted to wireless signals according to one of the IEEE 802.11 specifications, but may be applied also for other wireless communication standards requiring a correct RSSI value measurement. The disclosure resides therefore in the claims herein after appended.

## Claims

1. A method for verifying a radio signal strength information (RSSI) value of a first network device, **comprising**
providing a wireless connection between the first network device (ND1) with a second wireless network device (ND2),
measuring the RSSI values in both network devices,
varying a distance (D) between the wireless network devices and measuring for each distance the RSSI values in both wireless network devices, and
calculating for each distance a difference value of the RSSI values of the two network devices.

2. The method of claim 1, comprising: varying the distance for a multitude of distances including distances for which a low RSSI value is obtained.

3. The method of claim 1 or 2, comprising: varying the distance for a multitude of distances in fine steps from distances for which a low RSSI value is obtained to distances for which a high RSSI value are obtained.

4. The method of claim 1, 2 or 3, comprising: varying the distance for a multitude of distances in fine steps for distances for which a RSSI value below -50 dBm is obtained.

5. The method of one of the preceding claims, comprising:
comparing the difference values for each distance and
qualifying a difference value deviating from the majority of difference values as a wrong RSSI measurement in the first or second wireless network device.

6. The method of one of the preceding claims, wherein the first and second network devices include each a wireless node according to an IEEE 802.11 specification for providing the wireless connection.

7. A method for verifying a radio signal strength information (RSSI) value of a network device, **comprising**
placing the network device in a shielded box,
providing wireless signals inside the shielded box via an antenna arranged inside the box,
measuring the RSSI values of received wireless signals in the network device,
varying a transmitted power of the wireless signals as provided inside the shielded box, and
calculating for each transmitted power a difference value between the RSSI value of the network device and the transmitted power of the antenna.

8. The method of claim 7, comprising: varying the power for a multitude of powers including powers for which a low RSSI value is obtained.

9. The method of claim 7 or 8, comprising: varying the power for a multitude of powers in fine steps from powers for which a low RSSI value is obtained to powers for which a high RSSI value are obtained.

10. The method of claim 7, 8 or 9, comprising: varying the distance for a multitude of distances in fine steps for distances for which a RSSI value below -50 dBm is obtained.

11. The method of one of the preceding claims 7-10, comprising: comparing the difference values for each distance and qualifying a difference value deviating from the majority of difference values as a wrong RSSI measurement in the first or second wireless network device.

12. The method of one of the preceding claims 7-11, wherein the network device includes a wireless node according to an IEEE 802.11 specification for receiving of the wireless signals.

13. A test application including instructions, which when executed by a network device, performs a method in accordance with one of the claims 1-7.

14. A network device (ND1, ND2) comprising a processor and a memory including a test application for performing a method according to one of the preceding method claims.

15. A non-transitory program storage medium, having stored therein a test application including instructions, which when executed by a network device according to claim 14, performs a method in accordance with one of the preceding method claims.
